# EUROPEAN PATENT APPLICATION

(11) **EP 2 397 935 A1**
(43) Date of publication of application: **21.12.2011**
(21) Application number: 10738400.0
(22) Date of filing: 15.01.2010
(51) Int. Cl.: G06F 3/048, E02F 9/26, G09G 5/22

(54) **DISPLAY DEVICE FOR WORKING MACHINE AND LANGUAGE REPLACEMENT SYSTEM IN DISPLAY DEVICE**

(30) Priority: 04.02.2009 JP 2009023873; 04.02.2009 JP 2009023874
(71) Applicant: Kubota Corporation, Osaka-shi Osaka 556-8601 (JP)
(72) Inventor: MIURA Keisuke, Sakai-shi Osaka 590-0823 (JP); MATSUMOTO Atsushi, Sakai-shi Osaka 590-0823 (JP); UMEMOTO Susumu, Sakai-shi Osaka 590-0823 (JP); SAIJO Naohiro, Sakai-shi Osaka 590-0823 (JP)
(74) Representative: Brannen, Joseph Waclaw
(86) International application number: PCT/JP2010/050399
(87) International publication number: WO 2010/090061

(57) **Abstract**

[Summary]

The invention provides for making it possible to readily display information relating to a work machine, even when the mode of national language differs between the user and the vendor.

The invention is **characterized by** a user information displaying means for displaying user information relating to the work machine 1 to a user who is operating this work machine 1 and a vendor information displaying means for displaying vendor information relating to the work machine 1, separately from the user information. The user information displaying means includes a plurality of national languages corresponding to said user information so that the user information can be displayed in a plurality of national languages. The vendor information displaying means includes a plurality of national languages corresponding to the vendor information so that the vendor information can be displayed in a plurality of national languages. Further provided is a means for displaying the national language displaying by the user information displaying means and the national language displaying by the vendor information displaying means in different languages from each other.

## Description

### Technical Field

The present invention relates to a display apparatus for a work machine such as a backhoe and relates also to a language rewriting system for the display apparatus.

### Background Art

Conventionally, work machines such as a backhoe are used not only in Japan, but also in various countries. For this reason, a display apparatus for displaying various kinds of information relating to the work machine such as a driving condition of the work machine needs to cope with the language (national language) of the country where the machine is to be used.
As a work machine capable of displaying information in a plurality of languages, there is such a machine known from Patent Document 1. Patent Document 1 discloses a work machine including a displaying section for displaying information, a display data storing section for storing display data corresponding to the information to be displayed on the displaying section, and a control data storing section storing a portion of the display data to be displayed on the displaying section.

### Prior Art Document

### Patent Document

Patent Document 1: Japanese Patent Application "Kokai" No. 2007-244208

### Summary of the Invention

### Problem to be Solved by Invention

In the case of the work machine of Patent Document 1, a portion of the display data to be displayed on the displaying section is stored in the control data storing section. Therefore, it is possible to increase the number of national languages to be displayed, thereby to cope with many national languages.
However, a work machine sometimes is moved from one country to another. Hence, it is not rare that the vendor (dealer, maker) taking care of maintenance and the user using the work machine are located in different countries from each other. For instance, it can sometimes happen a situation where the contents displayed on the displaying section can easily be understood by the user, but it is not easy for the vendor to understand these contents displayed on the displaying section. In this way, there can sometimes occur difference of national language between the user and the vendor.

Further, as a work machine is moved across various countries, it is not rare that the place where the manufacture, the management, maintenance, etc. of the work machine was effected and the place where the work machine is used are in different countries. In such case, even with a display apparatus coping with a plurality of national languages, it is not possible for the apparatus to display in a national language of the place using the work machine, unless this display apparatus copes with national languages of all over the world.

In view of the above-described state of the art, the present invention relates to a display apparatus for a work machine, which apparatus is capable of readily displaying information relating to the work machine, even when the mode of national language differs between the user and the vendor.
The present invention relates also to a language rewriting system for a display apparatus of a work machine, which system is capable of rewriting appropriately the national languages provided in the display apparatus so that the display apparatus can display in a national language appropriately in accordance with the place or the like where the work machine is used.

### Means to Solve Problem

A display apparatus for a work machine, according to the present invention, comprises:
a user information displaying means for displaying user information relating to the work machine to a user who is operating this work machine;
a vendor information displaying means for displaying vendor information relating to the work machine, separately from said user information;
said user information displaying means including a plurality of national languages corresponding to said user information so that said user information can be displayed in a plurality of national languages;
said vendor information displaying means including a plurality of national languages corresponding to said vendor information so that said vendor information can be displayed in a plurality of national languages; and
a means for displaying said national language displaying by said user information displaying means and said national language displaying by said vendor information displaying means in different languages from each other.

Preferably, the inventive display apparatus further comprises a national language switching means for switching over said national language displaying by said user information displaying means and said national language displaying by said vendor information displaying means, independently of each other.

Preferably, in the above-described construction, said national language switching means effects a national language switching operation corresponding to said user information displaying means and a national language switching operation corresponding to said vendor information displaying means, by separate processes from each other.

Preferably, in the above-described construction, the number of languages are set such that the number of the national languages provided in said user information displaying means is greater than the number of national languages provided in said vendor information displaying means.

With the above-described invention, even if the modes of national languages used differs between the user and the vendor, the information relating to the work machine can be displayed easily.

A language rewriting system for a display apparatus of a work machine, according to the present invention, comprises:
a language writing device for writing a plurality of national languages as a national language group in a display apparatus for displaying information of the work machine so that said information can be displayed in a plurality of national languages;
a language rewriting instructing device configured to output a rewriting instruction to said display apparatus written with said national language group to cause said display apparatus to rewrite at least one of the national languages included in said national language group to a further national language; and
a language rewriting device for rewriting the language in the national language to said further national language in response to said rewriting instruction from said language rewriting instructing device.

Preferably, in the above-described construction, said language rewriting instructing device is configured to output a combination pattern of national languages as rewriting candidates as said rewriting instruction; and said language rewriting device rewrites a language stored in said display apparatus to a further language in accordance with said rewriting instruction from said language rewriting instructing device.

Preferably, in the above-described construction, said display apparatus includes:
a user information displaying means for displaying user information relating to the work machine to a user who is operating this work machine;
a vendor information displaying means for displaying vendor information relating to the work machine, separately from said user information;
said user information displaying means including a plurality of national languages corresponding to said user information as a national language group; and
said vendor information displaying means including a plurality of national languages corresponding to said vendor information as a national language group; and
wherein said language rewriting instructing device is configured to output, to said language rewriting device, a rewriting instruction for said national language group provided in said user information displaying means and a rewriting instruction for said national language group provided in said vendor information displaying means, individually; and
said language rewriting device is configured to be capable of rewriting said national language group provided in said user information displaying means and said national language group provided in said vendor information displaying means, respectively.

Preferably, in the above-described construction, said language rewriting instructing device includes a first mode to rewrite the national language group provided in said user information displaying means and to rewrite also the national language group provided in said vendor information displaying means, respectively and a second mode to rewrite only the national language group provided in said user information displaying means, said language rewriting instructing device being configured to output, in said second mode and as said rewriting instruction, an instruction to rewrite only the national languages of the national language group provided in said user information displaying means, while keeping intact the national languages of the national language group provided in said vendor information displaying means; and
in response to said rewriting instruction, said language rewriting device rewrites only the national languages of the national language group provided in said user information displaying means, while keeping intact the national languages of the national language group provided in said vendor information displaying means.

Preferably, in the above-described construction, said language rewriting instructing device and said language rewriting device are disposed in a different country than said language writing device.

According to this invention, the national languages provided in the display apparatus can be rewritten so that the national language displayed on the display apparatus may be displayed appropriately in accordance with e.g. the place where work machine is used.

### Brief Description of the Drawings

[Fig. 1] is a construction diagram of a display apparatus,
[Fig. 2] is an overall front view of the display apparatus,
[Fig. 3] show examples of displaying of user information, a) showing an example of displaying driving conditions, b) showing an example displaying an operation method,
[Fig. 4] show examples of displaying of vendor information, a) showing an example of displaying changing of specification, b) showing an example displaying for allowing checking of driving conditions at the time of maintenance, etc.,
[Fig. 5] shows a table summarizing national languages corresponding to user information and national languages corresponding to vendor information,
[Fig. 6] is a view showing switchover of screens in a normal screen mode,
[Fig. 7] is a view showing switchover of screen in a special screen mode,
[Fig. 8] is an explanatory view for explaining user switching mode,
[Fig. 9] is an explanatory view for explaining vendor switching mode,
[Fig. 10] shows an example of case where national languages corresponding to user information and national languages corresponding to vendor information are switched over,
[Fig. 11] illustrates a flow (system) from writing of national languages to the display apparatus to rewriting of the national languages written in the display apparatus,
[Fig. 12] is an explanatory view for explaining a rewriting setting means,
[Fig. 13] is a view showing example of switching of rewriting instructions outputted from a language rewriting instructing device, and
[Fig. 14] shows an overall side view of a work machine.

### Mode of Embodying the Invention

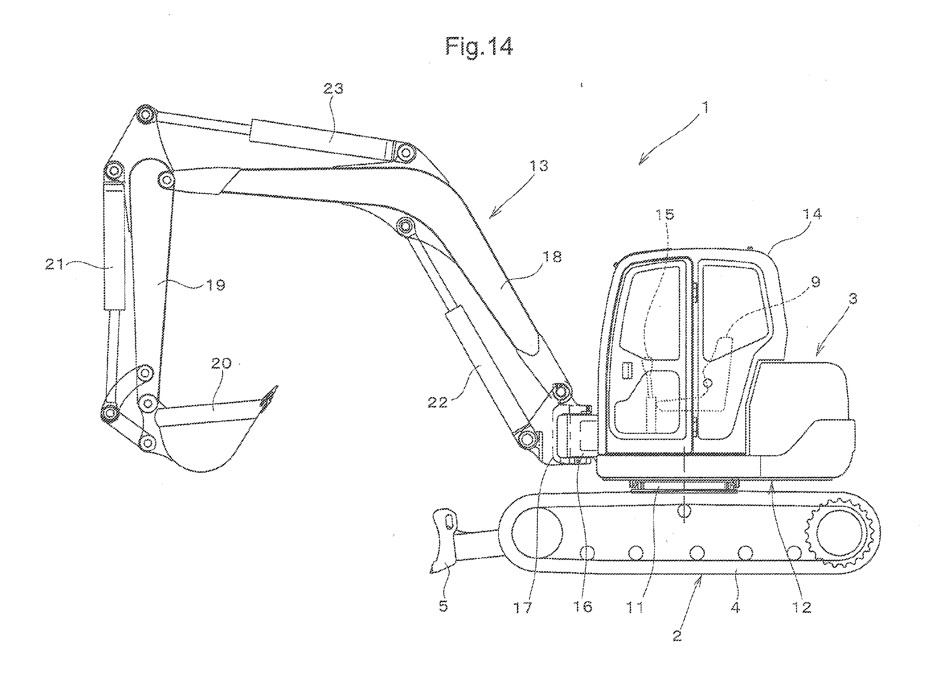

Next, modes of embodying the present invention will be described with reference to the accompanying drawings.
Fig, 14 shows a work machine for use with a communication system for a work machine relating to the present invention. Incidentally, the communication system for a work machine relating to the present invention is not limited to that of the work machine of this mode of embodiment.
As shown in Fig. 14, the work machine (backhoe) 1 includes a traveling device 2 disposed downward and a swivel body 3 disposed upward.
As the traveling device 2, there is employed a crawler type traveling device. This crawler type traveling device includes a pair of right and left traveling units 4 having rubber crawler belts, with both traveling units being driven by a traveling motor M. Further, forwardly of the traveling device 2, there is mounted a dozer 5.

The swivel body 3 includes a swivel deck 12 supported on the traveling device 2 to be swivellable to the right or left about a vertically oriented swivel shaft via a swivel bearing 11 and a work implement 13 (digging implement) mounted forwardly of the swivel deck 12. On the swivel deck 12, there are mounted an engine, a radiator, a driver's seat 9, a fuel tank, a work oil tank, etc. Around the driver's seat 9, there is provided a display apparatus 25 for displaying various kinds of information relating to the work machine 1. The driver's seat 9 is surrounded by a cabin 14 mounted on the swivel deck 12.
The work implement 13 includes a swing bracket 17 pivotally supported to a support bracket 16 to be pivotable about a vertical axis. The support bracket 16 is provided at a front portion of the swivel deck 12, with an offset to the right side relative to the right/left center. The implement 13 further includes a boom 18 having its base end portion pivotally attached to the swing bracket 17 to be pivotable vertically, an arm 19 pivotally attached to the leading end of the boom 18 to be pivotable fore-and-aft about a right/left axis, and a bucket 20 attached to the leading end of the arm 19 to be capable of scooping and dumping actions.

The swing bracket 17 is pivotable in response to expansion/contraction of a swing cylinder mounted inside the swivel deck 12. The boom 18 is pivoted in response to expansion/contraction of a boom cylinder 22 interposed between this boom 18 and the swing bracket 17. The arm 19 is pivoted in response to expansion/contraction of an arm cylinder 23 interposed between this arm 19 and the boom 18. The bucket 20 effects a scooping or dumping action in response to expansion/contraction of a bucket cylinder 21 interposed between this bucket 20 and the arm 19.

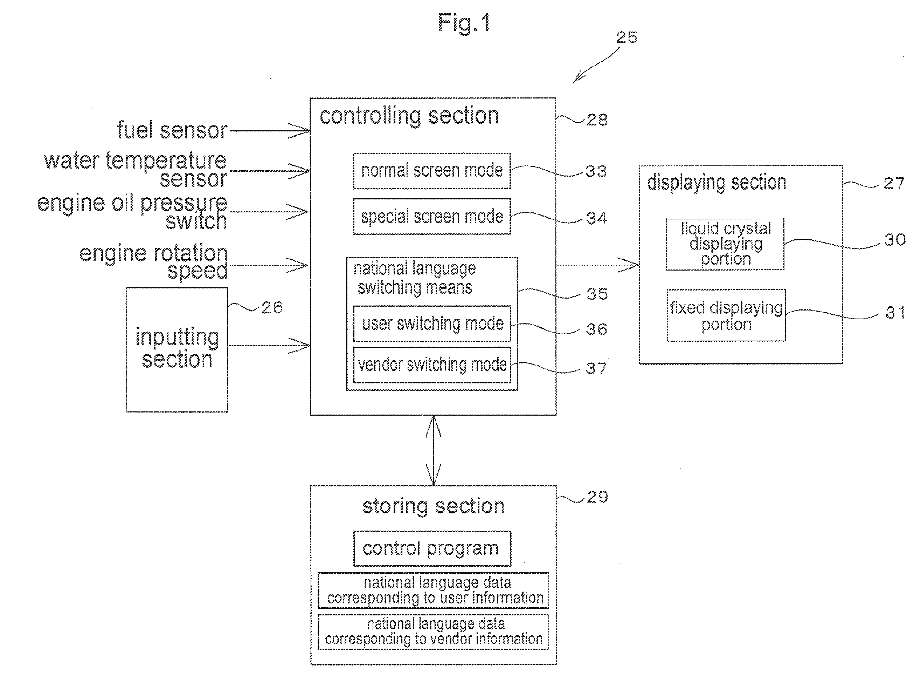

Figs. 1 through 10 show the display apparatus for the work machine. Next, this display apparatus will be explained in details.
As shown in Fig. 1, the display apparatus 25 includes an inputting section 26 for effecting e.g. various settings of the work machine 1, a displaying section 27 for displaying information relating to the work machine 1, a controlling section 28 comprised of a CPU, etc., and a storing section 29 comprised of e.g. a non-volatile memory.
The controlling section 28 inputs a fuel amount (remaining amount) outputted from a fuel sensor, a water temperature outputted from a water temperature sensor, an engine oil pressure switch for detecting presence or shortage of engine oil, various input signals from the inputting section 26, an engine rotation speed, etc. The controlling section 28 inputs also signals from other sensors, and signals from other controlling devices connected to this display apparatus 25.

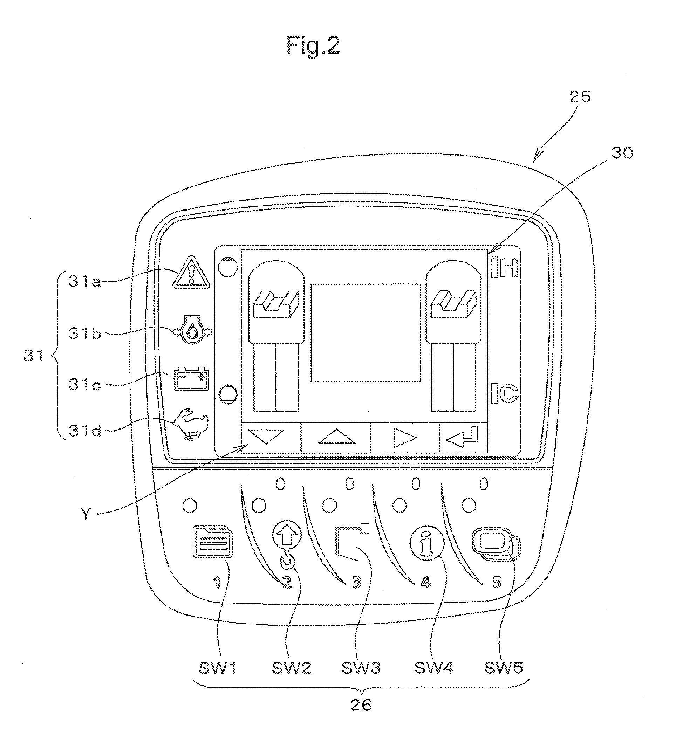

As shown in Fig. 1 and Fig. 2, the displaying section 27 includes a variable displaying portion 30 for displaying characters, graphic symbols, etc. in variable manner, and a fixed displaying portion 31 for showing conditions of the working machine 1 by switching ON/OFF of light. Incidentally, the variable displaying portion 30 displays e.g. characters, graphic symbols or the like by means of liquid crystal display. Hence, this portion 30 will be described as a liquid crystal displaying portion 30 hereinafter.
The fixed displaying portion 31 includes an alarm lamp 31a illuminated for alarming the user at the time of driving of the work machine 1, an oil lamp 31b illuminated for notifying shortage of engine oil, a battery lamp 31c illuminated for showing power shortage in battery, and a traveling lamp 31d illuminated for showing the work machine 1 being traveling at a high speed. The above-described alarm lamp 31a, the oil lamp 31b, the battery lamp 31c and the traveling lamp 31d indicate, by their non-illumination thereof, non-occurrence of the respective condition associated therewith. Incidentally, the fixed displaying portion 31 can include other than the alarm lamp 31a, the oil lamp 31b, the battery lamp 31c and the traveling lamp 31d as long as such other measures display information relating to the work machine 1 by way of illumination and non-illumination.

The liquid crystal displaying portion 30 displays information relating to the work machine 1 for use by a user (a worker: an operator) operating this work machine 1 ("user information" hereinafter) and information different from the user information and provided for use by a dealer or a maker ("vender information" hereinafter).
The user information refers to various kinds of information needed for the user when operating the work machine 1. Some non-limiting examples of the user information are information indicative of a driving condition of the work machine 1 needed when the user is operating this work machine 1, and information relating to an operation method for the user when operating the work machine 1, etc.

More particularly, the user information includes driving conditions of the engine 1, such as a fuel amount (remaining amount) displayed in a normal screen mode 33 which is displayed simply when an ignition switch ("key switch") for activating the engine is turned ON, a water temperature outputted from the water temperature sensor, an engine rotation speed, etc. In addition, the user information includes an operation method showing an operational member for operating the implement or the like and the operating direction of the implement, in correspondence with the screen.

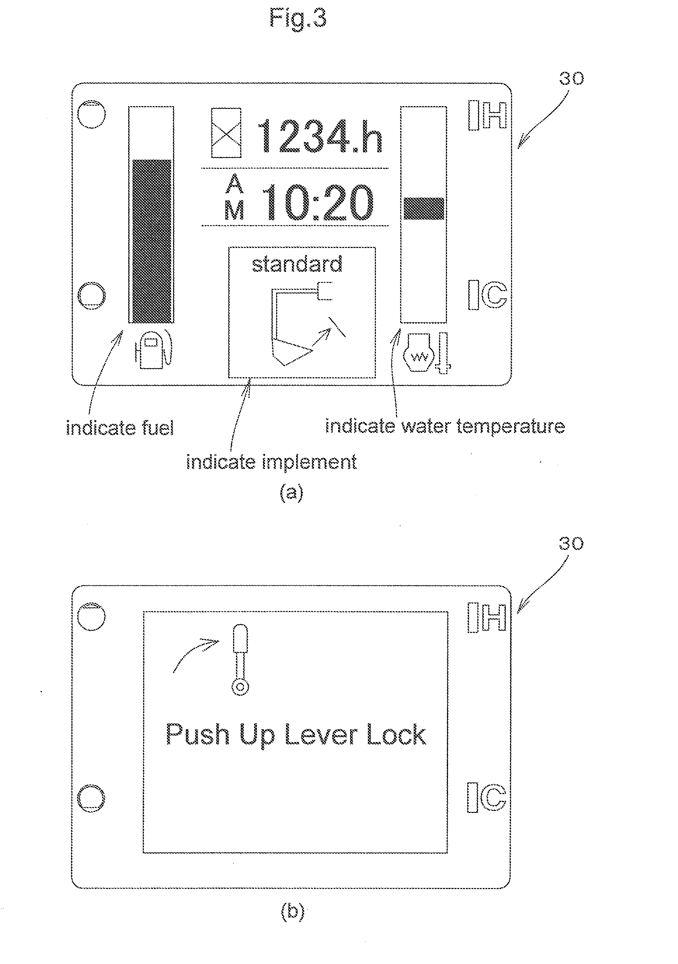

Fig. 3 shows examples of the user information displayed on the liquid crystal displaying portion 30.

As shown in Fig. 3 (a), on the left hand side of the liquid crystal displaying portion 30, there is shown by means of a graph for use by the user, the fuel remaining amount, as an example of driving conditions of the work machine 1. On the right hand side, there is shown by means of a graph, a water temperature as another example of driving conditions of the work machine 1. At the right/left center of the liquid crystal displaying portion 30, there is shown the implement attached to the leading end of the arm, in the form of a graphic symbol and characters. These graphic symbol and characters too are provided for notifying the user of what work implement is being currently attached and for indicting a driving condition. Therefore, these too are included in the "user information".

As shown in Fig. 3 (b), the liquid crystal displaying portion 30 is configured to show a graphic symbol and a character string indicating an operation of the operational member (lever). As an example of such character string, a character string: "Push Up Lever Lock" can be cited.
The vendor information comprises various kinds of information needed for a dealer or a maker to check the driving conditions of the work machine 1 or to effect various settings of the work machine 1 such as setting of its specification.

Specifically, in a special screen mode 34 which is entered in response to a special operation different from the above-described normal screen mode 33, the vendor information indicates driving conditions of the work machine such as fuel amount, water temperature, engine rotation speed, etc. In addition, the vendor information comprises displaying needed for effecting ON/OFF settings of various function of the work machine 1 and various settings of control devices of the work machine 1.

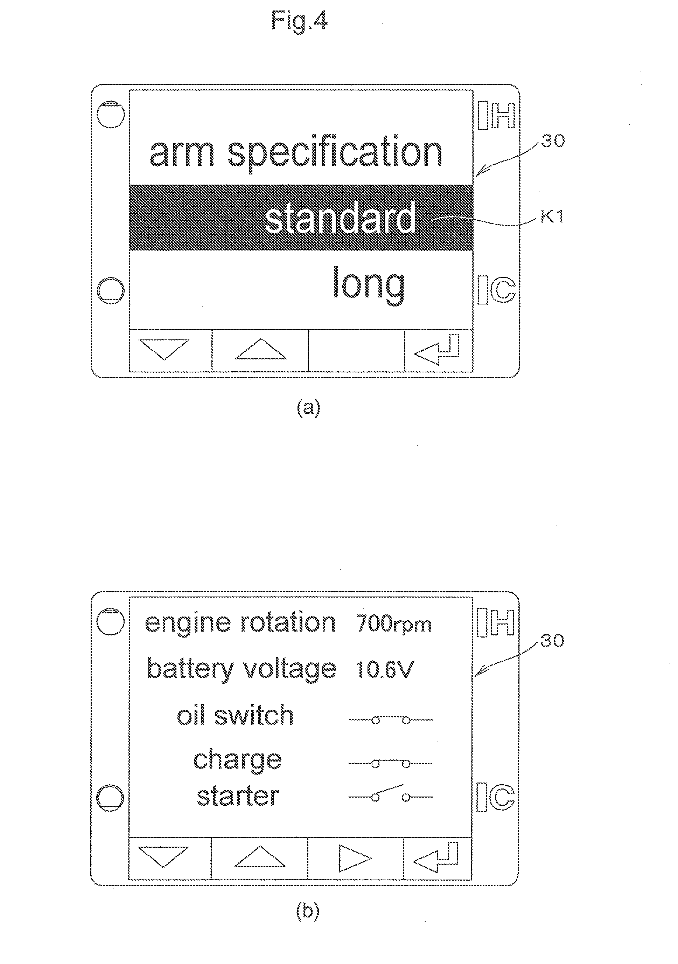

Fig. 4 shows examples of displaying of vendor information on the liquid crystal displaying portion 30. As shown in Fig. 4 (a), to allow a dealer or a maker to change the specification of the work machine 1, selection of the arm specification (standard, long) is displayed by characters and a cursor K1.

As shown in Fig. 4 (b), to show driving conditions of the work machine 1 to a dealer or a maker, the rotational speed of the engine and the voltage of battery are shown by numerals and also ON/OFF states of an oil switch, a charge switch and a starter are shown by respective graphic symbols.
The inputting section 26 includes a plurality of button switches SW (SW1, SW2, SW3, SW4, SW5). These plural switches SW are arranged in juxtaposition in the right/left direction adjacent the liquid crystal displaying portion 30 and each button switch has a predetermined function.

For instance, the button switch SW1 is provided to allow a user using the work machine 1 to effect setting of the operation and function of the work implement. The button switch SW2 is provided for setting the work mode to a suspension work mode. The button switch SW3 is provided for restricted setting of the pivotal range of the arm 17 of the work implement 13. The button switch SW4 is provided for providing the user with a predetermined guidance (information) by the liquid crystal displaying portion 30. The button switch SW5 is provided for switching over the displaying of the liquid crystal displaying portion 30.
Incidentally, the plurality of button switches SW are configured to function as switches for selection of arrows Y or the like, in correspondence with the respective arrows Y or the like displayed at the lower part of the liquid crystal displaying portion 30. It is understood that the respective button switches are not limited to those having the above-described functions, but may be provided with other functions.

The storing section 29 stores therein various elements or items (characters, character strings, numerals, graphic symbols) for displaying the user information and various elements or items (characters, character strings, numerals, graphic symbols) for displaying the vendor information. The storing section 29 stores also a control program for causing the liquid crystal displaying portion 30 to display the user information and the vendor information in correspondence with each operation.
In this storing section 29, there are stored a plurality of national languages (national language data) in correspondence with one user information, so that for this one user information, displaying thereof in a plurality of national languages is made possible. For instance, for one user information (characters): "engine rotational speed", in order to communicate this information (characters) in various languages, the storing section 29 stores a plurality of national languages (national language data), such as English (English data), German (German data), French (French data), Italian (Italian data), etc., corresponding to "engine rotational speed".

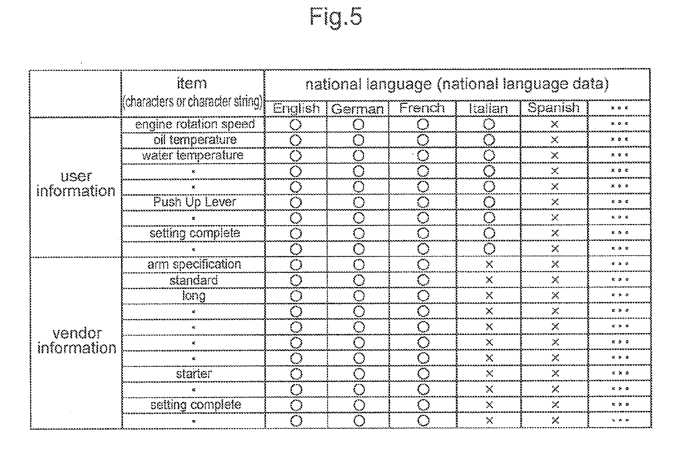

Similarly, in the storing section 29, there are also stored a plurality of national languages (national language data) in correspondence with one vendor information, so that for this one vendor information, displaying thereof in a plurality of national languages is made possible. For instance, for vendor user information (characters): "arm specification", in order to communicate this information (characters) in various languages, the storing section 29 stores a plurality of national languages (national language data), such as English (English data), German (German data), French (French data), Italian (Italian data), etc., corresponding to "arm specification".
For instance, the national languages corresponding to the user information and the national languages corresponding to the vendor information can be summarized as shown in Fig. 5. The symbol "○" shown in Fig. 5 indicates presence of the language stored in the storing section. The symbol "X" indicates absence of the language in the storing section.

As shown in Fig. 5, in correspondence with the respective characters or character string (to be referred to as an "item" hereinafter) indicative of user information, for instance, for each item, there are assigned national languages such as English, German, French, Italian, and the storing section 29 stores the national languages for each item to allow displaying each item in the assigned national languages.
In correspondence with the respective characters or character string (to be referred to as an "item" hereinafter) indicative of vendor information, for instance, for each item, there are assigned national languages such as English, German, French, Italian, and the storing section 29 stores the national languages for each item to allow displaying each item in the assigned national languages.

Incidentally, as exemplified by "setting complete" shown in Fig. 5, an item corresponding to the user information and an item corresponding to the vendor information may be same (same contents). However, this "setting complete" differs in the screens in which it is displayed (this is displayed in the normal mode in the case of the user information; whereas it is displayed in the special mode in the case of the vendor information). In this way, even when an item corresponding to the user information and an item corresponding to the vendor information are same, on the control program (data in the storing section), the same item (characters) is subject to different recognition or processing as characters.
In general, in the work machine 1, the number of items of the vendor information (total number of characters or characters strings) is greater than the number of items of the user information (total number of characters or characters strings); and the number of items corresponding to the vendor information is greater than the number of items corresponding to the user information.

For this reason, the data amount of the national languages required for enabling displaying of the vendor information in a plurality of national languages is greater than the data amount of the national languages required for enabling displaying of the user information in a plurality of national languages, even when the number of the national languages for the vendor information is the same as the number of the national languages for the user information. That is, in the storing section 29, the data amount of a national language consumed for allowing the vendor information to be displayed in the national language is greater than the data amount of the national language consumed for allowing the user information to be displayed in the national language, and the ratio between these national data amounts will be e.g. 7 : 3 (national language data amount for vendor information: national language data amount for user information).

With the displaying apparatus 25, for the information to be displayed on the displaying section 27, these information are divided into the user information and the vendor information and then, divided into the national languages (national language data) corresponding to the user information and the national languages (national language data) corresponding to the vendor information. Hence, it becomes possible to provide such difference as rendering the number of the national languages (national language data) corresponding to the vendor information fewer than the number of the national languages (national language data) corresponding to the user information.
In the storing section 29, by rendering the number of the national languages (national language data) corresponding to the vendor information fewer than the number of the national languages (national language data) corresponding to the user information, it is possible to reduce the amount of data consumed by the national language (national language data) corresponding to the vendor information, so that the free capacity (storage capacity) of the storing section 29 can be increased significantly.

And, with effective utilization of the storage capacity obtained by the decrease of the national languages (national language data) corresponding to the vendor information, it becomes possible to increase the national language data corresponding to the user information. Normally, the number of users needing the user information is greater than the number of dealers or makers needing the vendor information. Thus, it is readily possible to meet the users' demand.
The controlling section 28 is provided for controlling the inputting section 26, the displaying section 27, the storing section 29, etc. The controlling section 28 is operated according to the control program stored in the storing section 29 to allow appropriate displaying of the user information or the vendor information in accordance with the displaying of the liquid displaying portion 30.

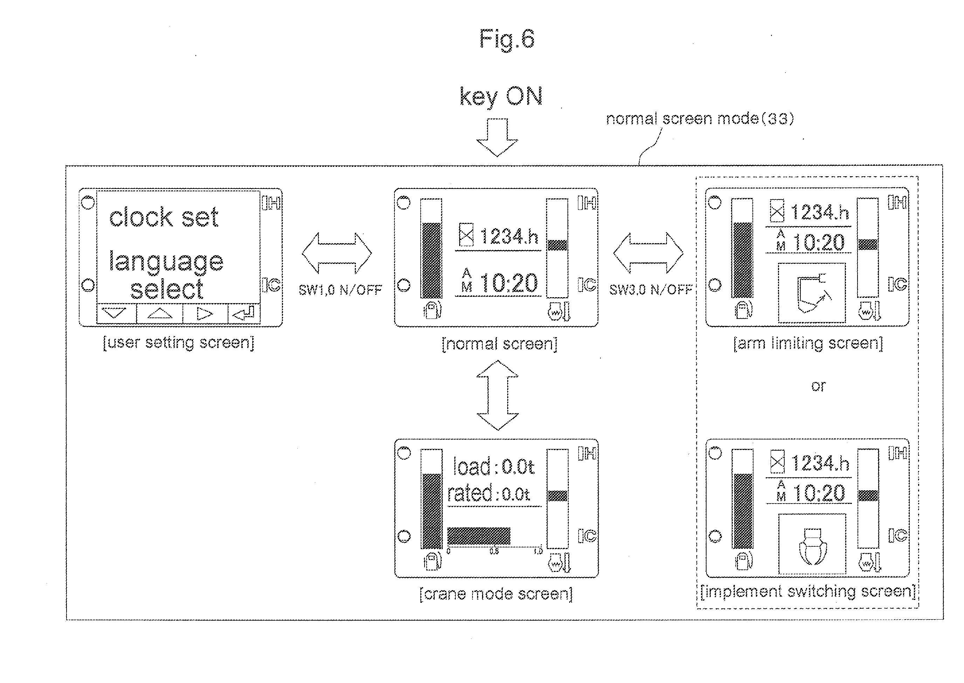

As shown in Fig. 6, the controlling section 28, upon start of driving the work machine 1 in response to an ON operation of the key switch for driving the engine, renders the control mode for causing the liquid displaying portion 30 into the normal screen mode 33. In this normal screen mode 33, there is provided a normal screen indicating fuel, water temperature, time, etc., in the case of absence of operations of the button switches SW.
When the liquid displaying portion 30 is providing the normal display screen, in response to ON operations of the plurality of button switches SW (SW1, SW2, SW3, SW3, SW4, SW5), the controlling section 28 switches the normal screen to other screen. For instance, in response to an ON operation on the button switch SW1, the controlling section 28 switches the liquid crystal displaying portion 30 to a user setting screen. In response to an ON operation on the button switch SW2, the liquid crystal displaying portion 30 is switched over to a crane mode screen. In response to an ON operation on the button switch SW3, the liquid crystal displaying portion 30 is switched over to an arm limiting screen or an implement switching screen. In response to an OFF operation of the respective button switches SW, the controlling section 28 switches the screen to the normal screen.

In these screens under the normal screen mode 33, i.e. the normal screen, the user setting screen, the crane mode screen, the arm limiting screen and the implement switching screen, the controlling section 28 causes displaying of various information required for a user to operate the working machine 1.
For instance, the user setting screen is provided for allowing the user to effect such settings as setting of time and a language to be displayed on the displaying portion 30. The crane mode screen is provided for rendering the work mode to the suspension work mode, etc. Also, the arm limiting screen is provided for allowing the user to effect e.g. setting for limiting the arm angle or for indicating the condition of the arm (angle, etc.) The implement switching screen is provided for allowing the user using the work machine 1 to effect settings of e.g. the operation, function or the like of the implement attached to the leading end of the arm 19.

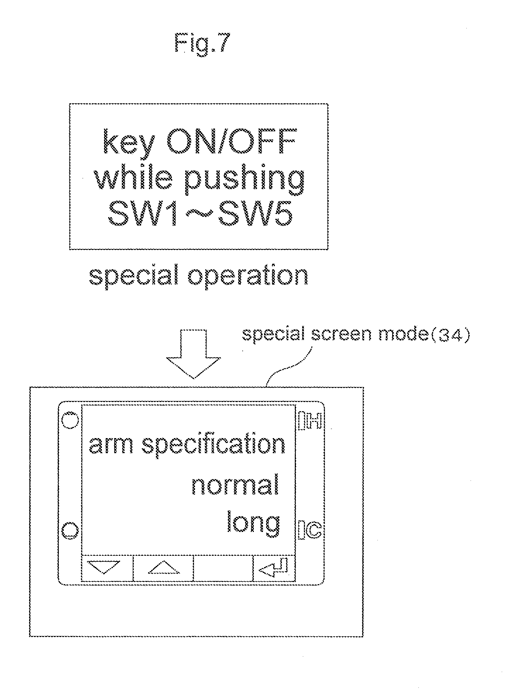

That is, in the normal screen, the user setting screen, the crane mode screen, the arm limiting screen and the implement switching screen, the information needed for the user for operating the work machine 1 through the operations of the controlling section 28, the storing section 29, the liquid displaying section 30, etc., i.e. the user information, are displayed.
As shown in Fig. 7, if the key switch is turned OFF while the button switch SW is being depressed or if the key switch is turned from ON to OFF, while the button switch SW is being depressed, that is, if a special operation different from the operations under the normal screen mode 33 is effected, the controlling section 28 changes the control mode displayed on the liquid crystal displaying portion 30 into the special screen mode 34. Under this special screen mode 34, screens for setting the specifications (functions) of the work machine 1 and various kinds of information for effecting maintenance of the work machine 1 are displayed. That is, under this special screen mode 34, various information needed for a dealer or a maker to effect checking of the driving conditions of the work machine 1, various settings of the specifications of the work machine 1, etc. are displayed. Namely, in the respective screens under the special screen mode 34, the vendor information through the operations of the controlling section 28, the storing section 29, the liquid crystal displaying portion 30, etc. are displayed.

Incidentally, the screen switchovers under the special mode and the screen displaying under the special mode are set appropriately through combination of ON/OFF of the plurality of button switches SW (SW1, SW2, SW3, SW4, SW5) and the ON/OFF of the key switch.
As described above, the controlling section 28, the liquid displaying portion 30 and the storing section 29 together constitute a "user information displaying means" for displaying information relating to the work machine 1 ("user information") to the user who is operating this work machine 1. As described above, the user information displaying means includes a plurality of national languages corresponding to the information so that this same information can be displayed in a plurality of national languages. And, by this user information displaying means (controlling section 28, liquid crystal displaying portion 30, storing section 29), there is appropriately displayed the user information needed by the user to operate the work machine 1 under the normal screen mode 33.

Similarly, the controlling section 28, the liquid displaying portion 30 and the storing section 29 together constitute also a "vender information displaying means" for displaying information relating to the work machine 1 ("vender information") to a vendor. As described above, this vendor information displaying means includes a plurality of national languages corresponding to the information so that this same information can be displayed in a plurality of national languages. And, by this vendor information displaying means (controlling section 28, liquid crystal displaying portion 30, storing section 29), there is appropriately displayed the vendor information needed by a dealer or a maker to operate the work machine 1 under the special screen mode 34.

The displaying apparatus 25 described above includes a national language switching means 35 for switching over the national language displaying by the user information displaying means and the national language displaying by the vendor information displaying means, independently of each other. This national language switching means 35 is incorporated within the control program stored in the storing section 29. In other words, the national language switching means 35 is comprised of the controlling section 29 that controls the liquid crystal displaying portion 30 and the storing section 29.

Next, the national language switching means 35 will be described in details. As shown in Fig. 5, in the displaying apparatus 25, the national languages corresponding to the user information and the national languages corresponding to the vendor information are configured such that the plurality of national languages correspond to each item.

The national language switching means 35 includes a user switching mode 36 for setting in which language characters or character string indicative of the user information are/is to be displayed and a vendor switching mode 37 for setting in which language characters or character string indicative of the vendor information are/is to be displayed. And, the national language switching means 35 is configured to cause the user information to be displayed in a national language set under the user switching mode 36 and to cause the vendor information to be displayed in a national language set under the vendor switching mode 37.

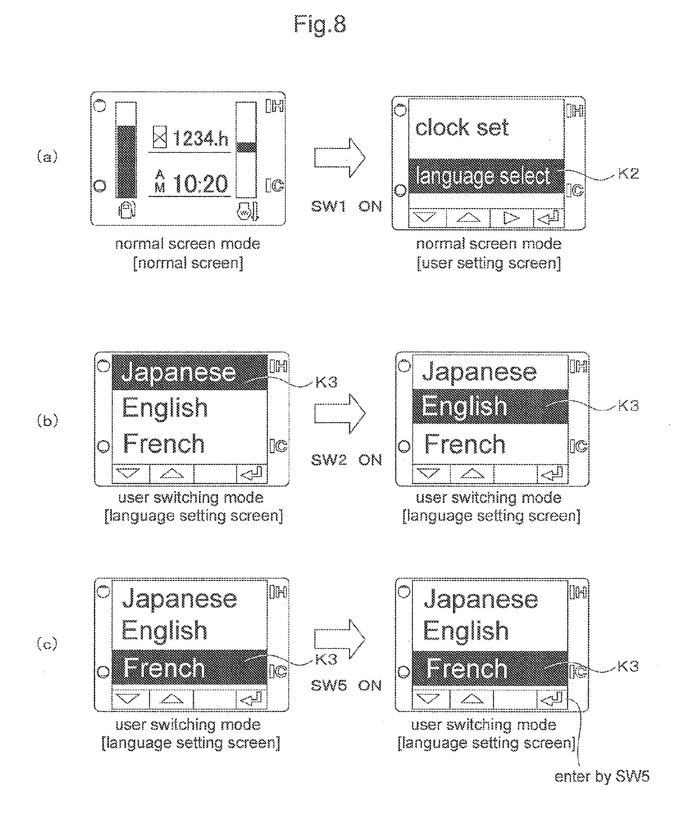

Fig. 8 is an explanatory view of the user switching mode 36.

As shown in Fig. 8 (a), in the case of the normal screen being provided, with the control mode of the liquid crystal displaying section 30 by the controlling section 28 being the normal screen mode 33, in response to a depressing operation on the button switch SW1, the screen is shifted into the user setting screen. Further, after decision of "language selection" displayed in the user setting screen with a cursor K2, the mode is switched to the user switching mode 36.
As shown in Fig. 8 (b), upon entry into the user switching mode 36, the controlling section 28 (national language switching means 35) renders the displaying of the liquid crystal displaying portion 30 to the language setting screen and causes displaying of the list of national language data (national languages) stored in the storing section 29. And, under the user switching mode 36, the controlling section 28 (national language switching means 35) controls the liquid crystal displaying portion 30 such that a cursor K3 or the like is displayed in superposition with the characters indicating one national language in the list of national languages displayed on the liquid crystal displaying portion 30 and this cursor K3 may be moved to another language in response to a depressing operation of the button switch SW2. That is, the controlling section 28 (national language switching means 36) controls the liquid crystal displaying portion 30 such that one national language can be selected by the cursor K3 from the list of the national languages displayed on the liquid crystal displaying portion 30.

As shown in Fig. 8 (c), under the user switching mode 36, when the cursor K3 is located at a predetermined position, if the button switch SW5 is depressed, the controlling section 28 (national language switching means 35) determines and recognizes that national language superposed with the cursor K3 is set (entered).
Under the user switching mode 36, upon setting of one national language from the plurality of national languages, the controlling section 28 (national language switching means 35), if under the normal screen mode 33, causes retrieval of the national language data set by the user switching mode 36 from the storing section 29. Thereafter, the user information to be displayed in the normal screen, the user setting screen, the crane mode screen, the arm limiting screen, the implement switching screen, will be displayed in the national language determined under the user switching mode 36. For instance, if "French language" has been selected under the user switching mode 36, then, the characters and character string in the normal screen, the user setting screen, the crane mode screen, the arm limiting screen, the implement switching screen, will be displayed in French language.

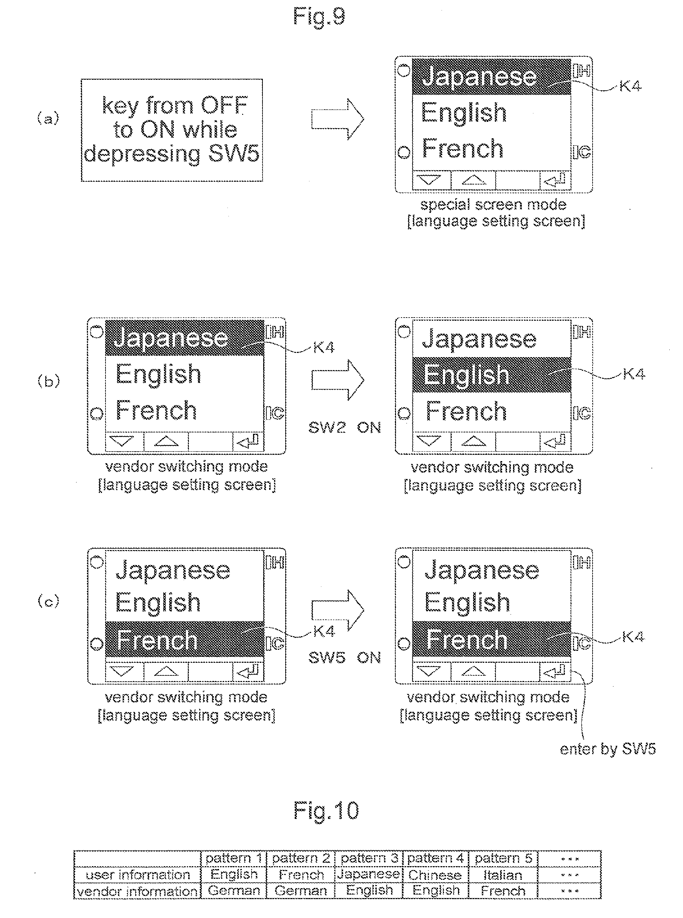

Fig. 9 is an explanatory view of the vendor switching mode 37.
As shown in Fig. 9 (a), if the key switch is turned from OFF to ON with the button switch SW5 being depressed, then, the control mode of the liquid crystal displaying portion 30 by the controlling section 28 is switched to the vendor switching mode 37 in the special screen mode 34 and the liquid crystal displaying screen is set to the language setting screen.
As shown in Fig. 9 (b), upon entry into the vendor switching mode 37, the controlling section 28 (national language switching means 35) causes the liquid crystal displaying portion 30 to display the list of national language data (national languages) stored in the storing section 29. And, under the vendor switching mode 37, the controlling section 28 (national language switching means 35) controls the liquid crystal displaying portion 30 such that a cursor K4 or the like is displayed in superposition with the characters indicating one national language in the list of national languages displayed on the liquid crystal displaying portion 30 and this cursor K4 may be moved to another language in response to a depressing operation of the button switch SW2. That is, the controlling section 28 (national language switching means 36) controls the liquid crystal displaying portion 30 such that one national language can be selected by the cursor K4 from the list of the national languages displayed on the liquid crystal displaying portion 30.

Under the vendor switching mode 37, when the cursor K4 is located at a predetermined position, if the button switch SW5 is depressed, the controlling section 28 (national language switching means 35) determines and recognizes that national language superposed with the cursor K4 is set (entered). Under the vendor switching mode 37, upon setting of one national language from the plurality of national languages, the controlling section 28 (national language switching means 35), if under the normal screen mode 33, causes retrieval of the national language data set by the vendor switching mode 37 from the storing section 29. Thereafter, the vendor information to be displayed in the special mode will be displayed in the national language determined under the vendor switching mode 37. For instance, if "French language" has been selected under the vendor switching mode 37, then, the characters and character string in the special screen mode will be displayed in French language.

In this way, the switchover of national languages by the user information switching means and the switchover of national languages by the vendor information switching means can be effected individually of each other by separate operations (processes); and the national languages corresponding to the user information and the national languages corresponding to the vendor information are not operably related to each other, but can be set independently of each other.
That is to say, as illustrated by Pattern 1 through Pattern 5 shown in Fig. 10, it is possible to make the national language displaying the user information on the liquid crystal displaying portion 30 different from the national language displaying the vendor information on the crystal liquid displaying portion 30.

As described above, the display apparatus 25 stores therein a plurality of national language data, so that with using the national language data, the information relating to the work machine 1 can be displayed in each individual national language.
The plurality of national language data stored in the display apparatus 25 are written during the process of manufacturing this display apparatus 25 (e.g. at a manufacturing factory). Then, the displaying apparatus 25 written with the plurality of national language data will be shipped alone or shipped as being assembled in the work machine 1 from the factory or the like. As the work machine 1 is used in various countries (regions) in the world, the national language data which have once been written in the displaying apparatus 25 in a factory or the like may sometimes be rewritten.

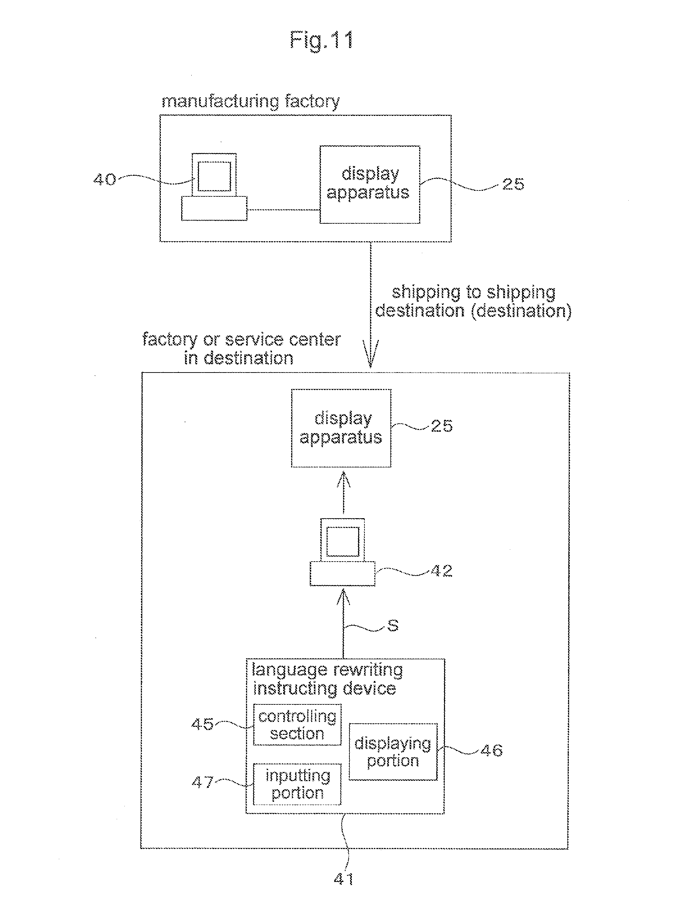

Fig. 11 illustrates the flow (system) from the writing of national languages in the display apparatus 25 to the rewriting of the national languages once written in the display apparatus 25. This system is a system including the language rewriting system for the display apparatus 25.
As shown i Fig. 11, the system includes a language writing device 40, a language rewriting instructing device 41 and a language rewriting device 42.
The language writing device 40 ("a writer") is a device for writing the plurality of national language data to the storing section 29 of the display apparatus 25. This language writing device 40 is comprised of a computer or the like and connected via a cable, a network or the like, to the display apparatus 25 for writing the predetermined national language data into the storing section29 of the display apparatus 25. As a matter of fact, the language writing device 40 includes a plurality of language data (e.g. national language data of 35 (thirty five) national languages).

The language writing device 40 is installed inside a factory (e.g. a factory in Japan) where the display apparatus 25 is manufactured and writes a predetermined number of national languages (national language data) as a main language group ("a group of national languages") in accordance with its shipping destination (destination). For instance, if the shipping destination (destination) of the display apparatus 25 is Europe, then, three national language data, i.e. English national language data, French national language data and German national language data, will be written as the main national language group. In this way, if the shipping destination of the display apparatus 25 is same, the national language data written in the display apparatus 25 are same.
Incidentally, although the language writing device 40 writes a plurality of national language data as the main national language group in accordance with the shipping destination, the number and the kinds of the languages included in the main language group corresponding to each character or character string indicative of the user information may be same as the number and the kinds of the languages included in the main language group corresponding to each character or character string indicative of the vendor information.

The language rewriting instructing device 41 is used for outputting an instruction S for rewriting at least one of the group of main languages to a different language to the display apparatus 25 which has been written in advance with the national languages (national language data) as a main language group by the language writing device 40.
The language writing device 40 is installed inside a factory in Japan or the like where the display apparatus 25 is manufactured; whereas, the language rewriting instructing device 41 is installed in a different country away from the language writing device 40 (e.g. a factory in the shipping destination or a service center in the shipping destination). In other words, the language rewriting instructing device 41 is located in a region far from the language writing device 40.

The language rewriting instructing device 41 is comprised of a computer or the like and includes a rewriting setting means for setting the national languages in the main national language group stored in the display apparatus 25. This rewriting setting means includes a controlling portion 46 comprised of a CPU incorporated in the computer, a displaying portion 46 (monitor) for displaying characters or the like and an inputting portion 47 (a keyboard, a mouse, etc.) for inputting characters, numerals, etc. By this rewriting setting means, it is possible to enter (decide) rewriting of the main language group stored in the display apparatus 25.
The language rewriting instructing device 41 ("rewriting setting means") is provided for rewriting the plurality of national languages (main language group) corresponding to the respective characters or character strings indicative of the user information. Further, the rewriting setting means is used also for rewriting the plurality of national languages (main language group) corresponding to the respective characters or character strings indicative of the vendor information. Namely, the language rewriting instructing device 41 outputs a rewriting instruction for the language group corresponding to the user information and a rewriting instruction for the language group corresponding to the vendor information, individually to the language rewriting device 42.

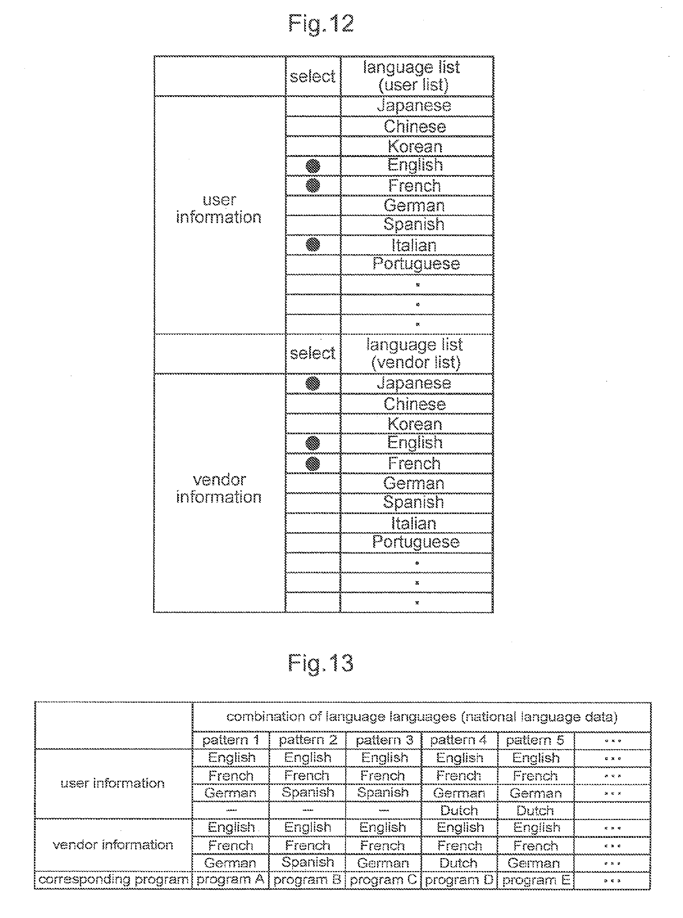

As shown in Fig. 12, more particularly, through controlling the controlling section 45 or the like, the rewriting instructing means, when activated, causes the displaying portion 46 to display a list of national languages (user list) as candidates for rewriting corresponding to the user information and to display a list of national languages (vendor list) as candidates to be rewritten, corresponding to the vendor information. In addition, the rewriting setting means allows the inputting portion 47 to set a desired national language from the user list and allows the inputting portion 47 to set also a desired national language from the vendor list.
Moreover, upon selection by the inputting section 47 of a national language from the user list, the rewriting setting means outputs to the outside a rewriting instruction S for rewriting the national language data selected for the user information and also upon selection by the inputting section 47 of a national language from the vendor list, the rewriting setting means outputs to the outside a rewriting instruction S for rewriting the national language data selected for the vendor information.

For instance, as shown in Fig. 12, if the mark "●" shown on the left side on the displaying portion 46 indicates selection (decision) of the national language, then, the national languages corresponding to the user information become "English", "French" and "Italian". Then, the rewriting setting means outputs the outside an instruction S for rewriting these three national language data for the user information. On the other hand, the national languages corresponding to the vendor information are "Japanese", "English" and "French", so that the rewriting setting means outputs an instruction S for rewriting these three national language data for the vendor information.
That is, the language rewriting instructing device 41 (rewriting setting means) is configured to output to the language writing device 42 an instruction S or rewriting the main language group corresponding to the user information and an instruction S for rewriting the main language group corresponding to the vendor information, individually of each other.

In the following discussion, for the sake of convenience of explanation, the national languages instructed by the rewriting instruction S for the user information are the three languages, i.e. English, French and Italian, And, the main language group stored in the storing section 29 of the display apparatus 25 prior to the rewriting operation are the three languages, i.g. English, German and French.
Further, respecting the vendor information, it will be assumed in the following discussion that the national languages designated by the rewriting instruction S are the three national languages, Japanese, English and French and the main language group stored in the storing section 29 of the display apparatus 25 prior to rewriting are English, German and French.

Incidentally, the writing setting means includes a setting mode for validating/invalidating a rewriting setting for the plurality of national languages (main language group) corresponding to the vendor information. More particularly, under this setting mode, by selecting a rewriting validating display or a rewriting invalidating display displayed on the display portion 46 by the inputting section47, a rewriting setting for the main language group corresponding to the vendor information can be validated (first mode) or invalidated (second mode). If the rewriting setting for the main language group corresponding to the vendor information is validated, that is, under the first mode, the displaying section 46 will display a vendor list as described above. On the other hand, if the rewriting setting for the main language group corresponding to the vendor information is invalidated, that is, under the second mode, the displaying section 46 will not display a vendor list as described above.

The language rewriting device 42 is provided for rewriting a national language (national language data) in the main language group into a different language (national language data), in accordance with the rewriting instruction S from the language rewriting instructing device 41. This language rewriting device 42, like the langue rewriting instructing device 41, is installed in a different country (e.g. a factory in Europe, a service center in Europe) far away from the language writing device 40. In other words, the language writing device 42 is installed at a shipping destination (destination) to which the display apparatus 25 is to be shipped from its place of manufacture (factory), thus being in a region away from the language writing device 40. Preferably, the language writing device 42 is installed in a same factory or region as the language rewriting instructing device 41.

The language rewriting device 42 is comprised of a computer or the like and can be connected to the language rewriting instructing device 41 via a network, so that the language rewriting device 42 can receive, via the network, signals from the language rewriting instructing device 41 such as the rewriting instruction S. Further, as the language rewriting device 42 is connected to the display apparatus 25 via a cable or a network, the language rewriting device 42 writes national language data set based on the rewriting instruction S to the display apparatus 25.
With the language rewriting device 42 in operation, respecting the user information, if the storing section 29 of this display apparatus 25 stores already national languages (English, French) that match the national languages (English, French, Italian) designated by the rewriting instruction S from the main national language group (English, German, French) stored in advance in the display apparatus 25, the language rewriting device 42 does not output to the display apparatus 25 the national language data (English data, French data) corresponding to the national language (English, French) to the display apparatus 25 for the same national languages as the rewriting instruction S and does not effect any rewriting. That is, with this language rewriting device 42, respecting the user information, if a national language designated by a rewriting instruction S is stored already in the storing section 29 of the display apparatus 25, the national language stored in the display apparatus 25 same as the national language designated by the rewriting instruction S is kept intact or as it is, and no rewriting thereof by the language rewriting device 42 (writing means) is effected.

On the other hand, with this language rewriting device 42, respecting the user information, if the national languages (English, French, Italian) designated by the rewriting instruction S include any language that does not correspond to the main language group (English, German, French), this non-corresponding national language (Italian) included in the rewriting instruction S is outputted to the display apparatus 25, so that the national language (German) not corresponding to the national languages stored in the display apparatus 25 and designated by the rewriting instruction S is overwritten by the new national language (Italian), thereby to update at least one national language included in the main language group in the display apparatus 25. Namely, respecting user information, if a national language designated by a rewriting instruction S is not stored in the storing section 29 of the display apparatus 25, the language rewriting device 42 will erase a national language that is stored in the display apparatus 25 and that does not correspond to the national language designated by the rewriting instruction S and writes into the display apparatus 25 a national language excluding those national languages corresponding to the rewriting instruction S.

With the language rewriting device 42 in operation, respecting the vendor information, if the storing section 29 of this display apparatus 25 stores already national languages (English, French) that correspond to the national languages (Japanese, English, French) designated by the rewriting instruction S from the main national language group (English, German, French) stored in advance in the display apparatus 25, the language rewriting device 42 does not output to the display apparatus 25 the national language data (English data, French data) corresponding to the national language (English, French) to the display apparatus 25 for the same national languages as the rewriting instruction S and does not effect any rewriting. That is, with this language rewriting device 42, respecting the vendor information, if a national language designated by a rewriting instruction S is stored already in the storing section 29 of the display apparatus 25, the national language stored in the display apparatus 25 same as the national language designated by the rewriting instruction S is kept intact or as it is, and no rewriting thereof by the language rewriting device 42 (writing means) is effected.

On the other hand, with this language rewriting device 42, respecting the vendor information, if the national languages (Japanese, English, French) designated by the rewriting instruction S include any language that does not correspond to the main language group (English, German, French), this non-corresponding national language (Japanese) included in the rewriting instruction S is outputted to the display apparatus 25, so that the national language (German) not corresponding to the national languages stored in the display apparatus 25 and designated by the rewriting instruction S is overwritten by the new national language (Japanese), thereby to update at least one national language included in the main language group in the display apparatus 25. Namely, respecting vendor information, if a national language designated by a rewriting instruction S is not stored in the storing section 29 of the display apparatus 25, the language rewriting device 42 will erase a national language that is stored in the display apparatus 25 and that does not correspond to the national language designated by the rewriting instruction S and writes into the display apparatus 25 a national language excluding those national languages corresponding to the rewriting instruction S.

Further, with this language rewriting device 42, if the setting of rewriting the main language group corresponding to the vendor information has been invalidated by the setting mode of the writing setting means of the language rewriting instructing device 41, the rewriting instruction S does not contain any rewriting instruction S for the vendor information, as a matter of course, the main language group of the vendor information stored in the storing section 29 of the display apparatus 25 will be kept as they are, whereas the main language group of the user information stored in the storing section 29 of the display apparatus 25 will be rewritten.
Fig. 13 shows examples of changes in the rewriting instruction S outputted from the language rewriting instructing device 41. As shown in Fig. 13, the language rewriting instructing device 41 includes a plurality of combination patterns of national languages. That is, the language rewriting instruction device 41 is configured to be capable of outputting combination patterns representing national language combinations. For example, the plurality of combination patterns such as those shown in Fig. 13 can be outputted from the language rewriting instructing device 41 to the language rewriting device 42. Pattern 1 shown in Fig. 13 is a basic pattern for Europe. Pattern 2 and Pattern 3 are patterns specialized for Spain. Pattern 4 and Pattern 5 are patterns specialized for Holland.

Pattern 2 and Pattern 3 are same in the respect of national languages in the national language groups corresponding to the user information, but are different in the respect of national languages in the national language groups corresponding to the vendor information. Pattern 4 and Pattern 5 also are same in the respect of national languages in the national language groups corresponding to the user information, but are different in the respect of national languages in the national language groups corresponding to the vendor information.
Next, there will be explained a case of rewriting national languages stored in the display apparatus 25, with using such language rewriting instructing device 41.
For instance, let us assume that a display apparatus 25 shipped from a manufacturing factory in Japan to a destination of a factory in Europe stores therein the plurality of national languages shown in Pattern 1. With this display apparatus 25, based on the premise that a rewriting of a national language corresponding to user information is to be effected, the storing section 29 includes one blank area or cell for allowing such national language rewriting.

If this display apparatus 25 or a work machine 1 equipped with the display apparatus 25 is to be shipped from the factory in Europe to Spain, the language rewriting instructing device 41 will output to the language rewriting device 42 a rewriting instruction S representing Pattern 2 or Pattern 3 (containing the Spanish language in the national language group corresponding to the user information), of the national language combination patterns. That is, the language rewriting instructing device 41 outputs, as the rewriting instruction S, a pattern of national languages as rewriting candidates, in accordance with the shipping destination.
If the rewriting instruction S is Pattern 2, then, the language rewriting device 42 will rewrite the national languages corresponding to the user information to the three languages, English, French and Spanish and also rewrites the national languages corresponding to the vendor information to the three languages, English, French and Spanish. If the rewriting instruction S is Pattern 3, then, the language rewriting device 42 will keep the national languages corresponding to the vendor information as they are and will rewrite the national languages corresponding to the user information.

Now, in case a display apparatus 25 storing therein the plurality of national languages indicated in Pattern 1 is shipped from a factory in Europe to Holland, the language rewriting instructing device 41 will output to the language rewriting device 42 a rewriting instruction S indicating Pattern 4 or Pattern 5 including Dutch language (including Dutch language in the national language group corresponding to the user information) of the national language combination patterns.
If the rewriting instruction S is Pattern 4, the language rewriting device 42 will rewrite the national languages corresponding to the user information to the four national languages of English, French, German and Dutch. In doing this, the language rewriting device 42 will write Dutch in the blank area of the storing section 29 prepared for rewriting. Further, the language rewriting device 42 will rewrite the national languages corresponding to the vendor information to the three languages of English, French and Dutch.

Meanwhile, in the foregoing explanation, the language rewriting device 42 is configured to rewrite into the display apparatus 25 only a national language to be rewritten, while keeping intact the national languages stored already in the display apparatus 25. However, the invention is not limited thereto.
Alternative arrangement is possible wherein regardless of in-advance storage or non-storage of national languages indicated by a rewriting instruction S in the display apparatus 25, the language rewriting device 42 transmits all national languages (national language data) to the display apparatus 26 to rewrite the national languages stored in this display apparatus 25. For instance, as shown in Fig. 13, programs set in accordance with the respective patterns (programs for writing all national languages indicated by the patterns) may be stored in advance in the language rewriting device 42. Then, when a predetermined pattern (for instance, Program A for Pattern 1, Program B for Pattern 2, Program C for Pattern 3, Program D for Pattern 4, Program E for Pattern 5) is set by a rewriting instruction S, the language rewriting device 42 can start up the program corresponding to this rewriting instruction (combination pattern), thereby to write the national language group designated by the rewriting instruction (combination pattern) in the display apparatus 25.

As described above, the display apparatus 25 includes a user information displaying means and a vendor information displaying means. The user information displaying means includes a plurality of national languages corresponding to this information so that the characters or character string (item) indicative of this information can be displayed in the plurality of national languages. The vendor information displaying means includes a plurality of national languages corresponding to this information so that the characters or character string (item) indicative of this information can be displayed in the plurality of national languages. Further, the display apparatus 25 includes means for displaying the national language displaying by the user information displaying means and the national language displaying by the vendor information displaying means, in different languages from each other.

With the above, for example, when a vendor has done manufacture, management, maintenance or the like of the work machine 1 in France, even if this work machine 1 is used by a user in Italy, the national language displaying by the vendor information displaying means may be done in French language and the national language displaying by the user information displaying means may be done in Italian language, respectively. Namely, even when the work machine 1 is moved across various countries, both the vendor and the user can readily understand the information relating to the work machine 1.
Further, there is provided a national language switching means 35 capable of switching over the national language displaying by the user information displaying means and the national language displaying by the vendor information displaying means, independently of each other. And, this national language switching means 35 is configured to effect a switching operation of the national languages corresponding to the user information displaying means and a switching operation of the national languages corresponding to the vendor information displaying means in separate processes from each other. So, the switching operation of the national language displaying for the user information and the national language displaying for the vendor information can be carried out consciously and with awareness; hence, the user will not inadvertently switch over the national language displaying corresponding to the vendor information or the vendor will not inadvertently switch over the national language displaying corresponding to the user information.

With the setting of the numbers of national languages so that the number of national languages included in the user information displaying means is greater than the number of national languages included in the vendor information displaying means, even if the country (region) where the manufacture, management, maintenance or the like of the work machine 1 is effected is different from the country (region) where the work machine 1 is used, the vendor and the user each can readily understand the information relating to the work machine 1.

Incidentally, the modes of embodiment disclosed herein above should be understood in all respects thereof to be illustrative of the present invention, not limiting the invention and the present invention is defined not by the foregoing description, but by the scope of claims. And, it is understood that the present invention is intended to be inclusive of all changes within the claimed range and the equivalents thereof.

The above-described language rewriting system includes a language writing device 40 for writing a plurality of national languages as a main language group (national language group) to a displaying apparatus 25 for displaying information relating to the work machine 1 so that the displaying apparatus 25 may display the information in the plurality of national languages, a language rewriting instructing device 41 configured to output a rewriting instruction to the display apparatus 25 written with the main language group to cause the display apparatus 25 to rewrite at least one of the national languages included in the main language group to a further national language, and a language rewriting device 42 for rewriting the language in the national language to the further national language in response to the rewriting instruction from the language rewriting instructing device 42.
With the above, of the main language group of the display apparatus 25, at least one can be rewritten. As a result, the display apparatus 25 can be provided with a national language of a country (region) according to a location to which the work machine 1 is to be moved or used, with keeping the main languages intact.

For instance,, in case the work machine 1 is to be moved across U.K., France and Italy in Europe, of the languages of the main language group written at the time of its manufacture, the German language can be rewritten or replaced by the Italian language, while keeping English and French languages intact as the main languages. In this way, the displaying section 27 can provide displaying in the language according to a location to which the work machine 1 is to be moved or used.
Incidentally, in the foregoing embodiment, since the system is configured to rewrite a national language in a main language group, the storage provided within the storing section 29 for storing national language data can be effectively utilized and at the same time the national language data (national languages) can be adapted to a country (region) when needed. That is, since the displaying by the national language data (national languages) is adapted to the country to which the work machine 1 is to be moved, there is no need to increase the capacity of the storing section 29.

In the above-described language rewriting system, the language rewriting instructing device 41 is configured to output a combination pattern of national languages as rewriting candidates as the rewriting instruction S; and the language rewriting device 42 rewrites a language stored in the display apparatus 25 to a further language in accordance with the rewriting instruction S indicating a combination pattern.
With the above construction, when a national language in the national language group stored in advance in the display apparatus 25 is to be rewritten into another national language, since a combination pattern of national languages is set in advance and the rewriting operation is effected in accordance with this combination pattern, the rewriting operation of a national language stored in the display apparatus 25 can be carried out very easily. For instance, suppose a case where a display apparatus 25 manufactured as a base in Japan is shipped to a factory in Europe located in a predetermined country and recompilation operation is done to the national language group of this display apparatus 25 in the factory and then this display apparatus 25 is to be shipped therefrom. In this case, if combination patterns of national languages are set in advance according to possible shipping destinations, it is readily possible to manufacture (process) a display apparatus having national languages according to a shipping destination.

In the above-described language rewriting system, the language rewriting instructing device 42 is configured to output to the language rewriting device 41, a rewriting instruction for the main language group included in the user information displaying mans and a rewriting instruction for the main language group included in the vendor information displaying mans, individually of each other; and the language rewriting device 42 is configured to rewrite the main language group included in the user information displaying means and the main language group included in the vendor information displaying means, in accordance with the rewriting instruction S.
With the above, for example, when a vendor has done manufacture, management, maintenance or the like of the work machine 1 in France, even if this work machine 1 is used by a user in Italy, i.e. in a nearby country, the national language displaying by the vendor information displaying means may be done in French language and the national language displaying by the user information displaying means may be done in Italian language, respectively. Namely, even when the work machine 1 is moved across various countries, both the vendor and the user can readily understand the information relating to the work machine 1.

The language rewriting instructing means 41 is configured to output, as the rewriting instruction S, an instruction for rewriting the national languages in the national language group provided in the user information displaying means, while keeping intact national languages in the national language group provided in the vendor information displaying means. And, the language rewriting device 42 is configured to rewrite the national languages in the national language group provided in the user information displaying means, while keeping intact the national languages in the national language group provided in the vendor information displaying means, in response to said rewriting instruction S. With this construction, it becomes possible to rewrite the main language group of the user information stored in the storing section 29 of the display apparatus 25, without rewriting the national languages in the main language group (national language group) provided in the vendor information displaying means. As a result, since only a national language corresponding to the user information is rewritten, when the work machine 1 is moved around the base location where its manufacture, management, maintenance, or the like is done, it is possible to adapt the displaying of the display apparatus 25 to a displaying system (displaying system for user) centering about the national language of the location where the work machine 1 is to be moved and the data relating to the vendor information is not processed. Hence, the area of the storing section 29 can be utilized efficiently. In the above, preferably, the language rewriting instructing device 41 and the language rewriting device 42 are installed in a country different from a country where the language writing device 40 is installed.

With the above construction, by the language rewriting instructing device 41 and the language writing device 42 that are installed in a country different from a country where the language writing device 40 is installed, re-compiling operation (rewriting operation) of the national languages of the display apparatus 25 can be done easily. There is no need of troublesome transporting of the display apparatus 25 to the country of the origin of its manufacture where the language writing device 40 is installed, for the purpose of changing the national languages of this display apparatus 25. Hence, the rewriting operation of the national languages in the display apparatus 25 can be done easily.
Incidentally, the modes of embodiments disclosed herein should be understood in all respects thereof to be illustrative of the present invention, not limiting the invention and the present invention is defined not by the foregoing description, but by the scope of claims. And, it is understood that the present invention is inclusive of all changes within the claimed range and the equivalents thereof.

### Industrial Applicability

The present invention is applicable to a display apparatus for a work machine and to a language rewriting system in the display apparatus.

### Description of Reference Marks

- 1: work machine
- 25: display apparatus
- 27: displaying section
- 29: storing section
- 30: liquid crystal displaying portion
- 31: fixed displaying portion
- 35: national language switching means

## Claims

1. A display apparatus for a work machine, comprising:
a user information displaying means for displaying user information relating to the work machine to a user who is operating this work machine;
a vendor information displaying means for displaying vendor information relating to the work machine, separately from said user information;
said user information displaying means including a plurality of national languages corresponding to said user information so that said user information can be displayed in a plurality of national languages;
said vendor information displaying means including a plurality of national languages corresponding to said vendor information so that said vendor information can be displayed in a plurality of national languages; and
a means for displaying said national language displaying by said user information displaying means and said national language displaying by said vendor information displaying means in different languages from each other.

2. The display apparatus for a work machine according to claim 1, further comprising a national language switching means for switching over said national language displaying by said user information displaying means and said national language displaying by said vendor information displaying means, independently of each other.

3. The display apparatus for a work machine according to claim 1 or 2, wherein said national language switching means effects a national language switching operation corresponding to said user information displaying means and a national language switching operation corresponding to said vendor information displaying means, by separate processes from each other.

4. The display apparatus for a work machine according to any one of claims 1-3, wherein the number of languages are set such that the number of the national languages provided in said user information displaying means is greater than the number of national languages provided in said vendor information displaying means.

5. A language rewriting system for the display apparatus of a work machine, the system comprising:
a language writing device for writing a plurality of national languages as a national language group in a display apparatus for displaying information of the work machine so that said information can be displayed in a plurality of national languages;
a language rewriting instructing device configured to output a rewriting instruction to said display apparatus written with said national language group to cause said display apparatus to rewrite at least one of the national languages included in said national language group to another national language; and
a language rewriting device for rewriting the language in the national language to said further national language in response to said rewriting instruction from said language rewriting instructing device.

6. The language rewriting system for the display apparatus of a work machine according to claim 5, wherein said language rewriting instructing device is configured to output a combination pattern of national languages as rewriting candidates as said rewriting instruction; and said language rewriting device rewrites a language stored in said display apparatus to a further language in accordance with said rewriting instruction from said language rewriting instructing device.

7. The language rewriting system for the display apparatus of a work machine according to claim 5 or 6, wherein said display apparatus includes:
a user information displaying means for displaying user information relating to the work machine to a user who is operating this work machine;
a vendor information displaying means for displaying vendor information relating to the work machine, separately from said user information;
said user information displaying means including a plurality of national languages corresponding to said user information as a national language group; and
said vendor information displaying means including a plurality of national languages corresponding to said vendor information as a national language group; and
wherein said language rewriting instructing device is configured to output, to said language rewriting device, a rewriting instruction for said national language group provided in said user information displaying means and a rewriting instruction for said national language group provided in said vendor information displaying means, individually; and
said language rewriting device is configured to be capable of rewriting said national language group provided in said user information displaying means and said national language group provided in said vendor information displaying means, respectively.

8. The language rewriting system for the display apparatus of a work machine according to claim 7, wherein said language rewriting instructing device includes a first mode to rewrite the national language group provided in said user information displaying means and to rewrite also the national language group provided in said vendor information displaying means, respectively and a second mode to rewrite only the national language group provided in said user information displaying means,
said language rewriting instructing device being configured to output, in said second mode and as said rewriting instruction, an instruction to rewrite only the national languages of the national language group provided in said user information displaying means, while keeping intact the national languages of the national language group provided in said vendor information displaying means; and
in response to said rewriting instruction, said language rewriting device rewrites only the national languages of the national language group provided in said user information displaying means, while keeping intact the national languages of the national language group provided in said vendor information displaying means.

9. The language rewriting system for the display apparatus of a work machine according to any one of claims 5-8, wherein said language rewriting instructing device and said language rewriting device are disposed in a different country than said language writing device.
